(19) Europäisches Patentamt
European Patent Office
Office européen des brevets

(11) Veröffentlichungsnummer: **0 672 704 A2**

# (12) EUROPÄISCHE PATENTANMELDUNG

(21) Anmeldenummer: **95103459.4**

(22) Anmeldetag: **10.03.95**

(51) Int. Cl.[6]: **C08J 3/00**, C08L 59/00, C08L 75/04, //(C08L59/00, 75:04),(C08L75/04,59:00)

(30) Priorität: **18.03.94 DE 4409277**

(43) Veröffentlichungstag der Anmeldung: **20.09.95 Patentblatt 95/38**

(84) Benannte Vertragsstaaten: **BE DE FR GB IT NL**

(71) Anmelder: **BASF Aktiengesellschaft
Carl-Bosch-Strasse 38
D-67063 Ludwigshafen (DE)**

(72) Erfinder: **Kielhorn-Bayer, Sabine, Dr.
Dürkheimer Strasse 10
D-67133 Maxdorf (DE)**
Erfinder: **Sänger, Dietrich, Dr.
Lorscher Ring 16a
D-67227 Frankenthal (DE)**
Erfinder: **McKee, Graham Edmund, Dr.
Heinrich-Strieffler-Strasse 68
D-67433 Neustadt (DE)**
Erfinder: **Weigelt, Franz Werner, Dr.
1104 Hanging Lantern Circle
Mobile, AL 36695 (US)**
Erfinder: **Dorn, Klaus, Dr.
Treuener Strasse 6
D-63457 Hanau (DE)**

## (54) Farbstabile schlagzähe thermoplastische Formmassen auf Basis von polyoxymethylenen.

(57) Kontinuierliches Verfahren zur Herstellung von thermoplastischen Formmassen auf der Basis von Polyoxymethylenen und thermoplastischen Polyurethanen in einem Extruder, dadurch gekennzeichnet, daß man

I) in einem ersten Bereich bei Temperaturen von 170 bis 280°C

A) 10 bis 99 Gew.-% eines Polyoxmethylenhomo- oder -copolymerisates und

B) 0 bis 50 Gew.-% Zusatzstoffe und Verarbeitungshilfsmittel,

wobei sich die Angaben in Gewichtsprozent auf das Gesamtgewicht der Komponenten A) bis C) beziehen, über einen Zeitraum von 0,1 bis 15 min erhitzt, und eine homogene Polymerschmelze herstellt und

II) anschließend in mindestens einem weiteren Bereich des Extruders bei 175 bis 220°C

C) 1 bis 50 Gew.-% eines thermoplastischen Polyurethans

zusetzt, homogenisiert und die erhaltene Mischung extrudiert.

EP 0 672 704 A2

Die Erfindung betrifft ein verbessertes Verfahren zur Herstellung von thermoplastischen Formmassen auf der Basis von Polyoxymethylenen (POM) und thermoplastischen Polyurethanen (TPU) in einem Extruder.

Polyoxymethylene enthalten nach der Polymerisation aus z.B. Trioxan und gegebenenfalls anderen Comonomeren noch thermisch instabile Kettenenden in größeren Mengen.

Diese können entweder über hydrolytischen Abbau mit z.B. Methanol/Wasser entfernt werden oder thermisch in geeigneten Vorrichtungen abgebaut werden.

Anschließend kann das endgruppenstabile Polymere mit anderen Komponenten für die jeweiligen Verwendungen abgemischt werden.

Beim hydrolytischen Abbau werden für die Herstellung von POM/TPU Formmassen 2 Verfahrensschritte benötigt, wie u.a. in der EP-A 409 464 beschrieben.

Beim thermischen Abbau der instabilen Kettenenden wird das so hergestellte POM-Granulat mit TPU-Granulat gemischt und erneut in einem Extruder aufgeschmolzen und konfektioniert.

Dies ist u.a. aus den EP-A 117 664, EP-A 116 456, EP-A 121 407 und EP-A 120 711 bekannt.

Die Fließfähigkeit und die Farbstabilität derartiger Formmassen sind verbesserungswürdig.

Polymere zu sogenannten Blends miteinander zu verarbeiten ist allgemein bekannt, wobei das Herstellungsverfahren auch in einem Schritt erfolgen kann, s. z.B. Werner & Pfleiderer Firmenbroschüre Kunststofftechnik, Verfahren und Methoden: Technische Kunststoffe.

Aus der EP-A 484 737 ist es bekannt, einen Blend aus Polyester/POM herzustellen, wobei über den Seitenextruder ein vorab hergestellter schlagzähmodifizierter Polyester in die POM-Schmelze eingearbeitet wird.

Weiterhin ist es aus der EP-A 477 770 bekannt, Polyamid/POM Blends herzustellen, wobei über den Seitenextruder ein schlagzähmodifiziertes Polyamid in die POM-Schmelze eingearbeitet wird.

Der vorliegenden Erfindung lag daher die Aufgabe zugrunde, ein verbessertes Herstellverfahren für mit TPU zähmodifizierte POM-Formmassen zur Verfügung zu stellen, welche zu verbesserten Schlagzähigkeitseigenschaften, größerer Farbstabilität und Fließfähigkeit führt.

Insbesondere soll das Herstellverfahren auf einfache technische Weise durchführbar sein, wobei die Verfahrensweise unabhängig von Art und Menge der eingesetzten Komponenten und Additive sein soll.

Diese Aufgabe wird erfindungsgemäß durch ein Verfahren gemäß Anspruch 1 gelöst.

Die durch das erfindungsgemäße Verfahren herstellbaren Formmassen enthalten als Komponente A) 10 bis 99, vorzugsweise 30 bis 90 und insbesondere 60 bis 80 Gew.-% eines Polyoxymethylenhomo- oder -copolymerisats.

Derartige Polymerisate sind dem Fachmann an sich bekannt und in der Literatur beschrieben.

Ganz allgemein weisen diese Polymere mindestens 50 mol-% an wiederkehrenden Einheiten $-CH_2O-$ in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten $-CH_2O-$ noch bis zu 50, vorzugsweise 0,1 bis 20 und insbesondere 0,3 bis 10 mol-% an wiederkehrenden Einheiten

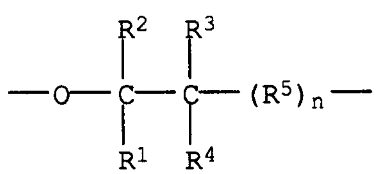

wobei i $R^1$ bis $R^4$ unabhängig voneinander ein Wasserstoffatom, eine $C_1$- bis $C_4$-Alkylgruppe oder eine halogensubstituierte Alkylgruppe mit 1 bis 4 C-Atomen und $R^5$ eine $-CH_2-$, $-CH_2O-$, eine $C_1$- bis $C_4$-Alkyl- oder $C_1$- bis $C_4$-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel

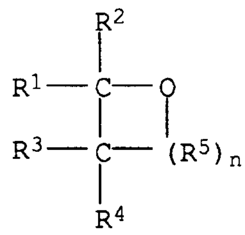

wobei $R^1$ bis $R^5$ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel

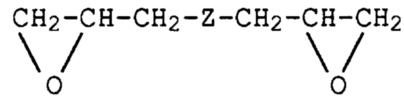

wobei Z eine chemische Bindung, -O-, -ORO- (R = $C_1$- bis $C_8$-Alkylen oder $C_2$- bis $C_8$-Cycloalkylen) ist, hergestellt werden.

Bevorzugte Monomere dieser Art sind Ethylendiglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) Mw im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

Als Komponente A) können insbesondere auch Produkte eingesetzt werden, die noch einen relativ hohen Anteil (im allg. bis zu 20 Gew.-%, vorzugsweise jedoch nicht mehr als 10 Gew.-% und insbesondere nicht mehr als 5 Gew.-%, bezogen auf A), an thermisch instabilen Kettenenden enthalten. Die Komponenten B), insbesondere wenn sie vor der Mischung mit dem Polyoxymethylen vorgemischt werden, stabilisieren derartige Roh-Polyoxymethylene sehr gut.

Neben den Komponenten A) und C) können die erfindungsgemäßen Formmassen noch übliche Zusatzstoffe und Verarbeitungshilfsmittel B) enthalten u.z. in Mengen bis zu 50, vorzugsweise bis zu 20 und insbesondere bis zu 10 Gew.-%. Nur beispielhaft seien hier Zusätze zum Abfangen von Formaldehyd (Formaldehyd-Scavenger), Weichmacher, Schmiermittel, Antioxidantien, Haftvermittler, Lichtstabilisatoren und Pigmente genannt. Der Anteil solcher Zusätze liegt im allgemeinen im Bereich von 0,001 bis 5 Gew.-%.

Als Nukleierungsmittel können die erfindungsgemäßen Formmassen gemäß einer bevorzugten Ausführungsform ein Melamin-Formaldehyd-Kondensat enthalten. Geeignete Produkte werden z.B. in der DE 25 40 207 beschrieben.

Entsprechende Verbindungen sind dem Fachmann bekannt und beispielsweise in der EP-A 327 384 beschrieben.

Die als Komponente B) verwendbaren Polyamide sind an sich bekannt. Halbkristalline oder amorphe Harze, wie sie z.B. in der Encyclopedia of Polymer Science and Engineering, Vol. 11, S. 315 bis 489, John Wiley & Sons, Inc. 1988 beschrieben werden, können eingesetzt werden, wobei der Schmelzpunkt des Polyamids vorzugsweise unter 225°C, vorzugsweise unter 215°C liegt.

Beispiele hierfür sind Polyhexamethylenazelainsäureamin, Polyhexamethylensebacinsäureamid, Polyhexamethylendodekandisäureamid, Poly-11-aminoundekansäureamid und Bis-(p-aminocyclohexyl)-methandodekansäurediamid oder die durch Ringöffnung von Lactamen, z.B. oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet.

Als besonders geeignete Polyamide seien Mischpolyamide auf der Grundlage von Caprolactam, Hexamethylendiamin, p,p'-Diaminodicyclohexylmethan und Adipinsäure genannt. Ein Beispiel hierfür ist das unter der Bezeichnung Ultramid® 1 C von der BASF Aktiengesellschaft vertriebene Produkt.

Weitere geeignete Polyamide werden von der Firma Du Pont unter der Bezeichnung Elvamide® vertrieben.

Die Herstellung dieser Polyamide wird ebenfalls in der vorgenannten Schrift beschrieben. Das Verhältnis von endständigen Aminogruppen zu endständigen Säuregruppen kann durch Variation des Molverhältnisses der Ausgangsverbindungen gesteuert werden.

Der Anteil des Polyamids in der erfindungsgemäßen Formmasse beträgt vorzugsweise 0,005 bis 1,99 Gew.-%, insbesondere 0,01 bis 1,5 Gew.-%.

Durch die Mitverwendung eines Polykondensationsprodukts aus 2,2-Di-(4-hydroxyphenyl)propan (Bisphenol A) und Epichlorhydrin kann in manchen Fällen die Dispergierbarkeit der verwendeten Polyamide verbessert werden.

Derartige Kondensationsprodukte aus Epichlorhydrin und Bisphenol A sind kommerziell erhältlich. Verfahren zu deren Herstellung sind dem Fachmann ebenfalls bekannt. Handelsbezeichnungen der Polykondensate sind Phenoxy® (der Union Carbide Corporation) bzw. Epikote® (Firma Shell). Das Molekulargewicht der Polykondensate kann in weiten Grenzen variieren; prinzipiell sind die im Handel erhältlichen Typen sämtlich geeignet.

Als Komponente B) können die erfindungsgemäßen Polyoximethylen-Formmassen 0,002 bis 2,0 Gew.-%, vorzugsweise 0,005 bis 0,5 Gew.-% und insbesondere 0,01 bis 0,3 Gew.-%, bezogen auf das Gesamtgewicht der Formmassen eines oder mehrerer Erdalkalisilikate und/oder Erdalkaliglycerophosphate enthalten. Als Erdalkalimetalle zur Bildung der Silikate und Glycerophosphate haben sich vorzugsweise Calcium und insbesondere Magnesium vorzüglich bewährt. Anwendung finden zweckmäßigerweise Calciumglycerophosphat und vorzugsweise Magnesiumglycerophosphat und oder Calciumsilikat und vorzugsweise Magnesiumsilikat, wobei als Erdalkalisilikate, insbesondere solche bevorzugt sind, die durch die Formel

$$Me \cdot x\,SiO_2 \cdot n\,H_2O$$

beschrieben werden, in der bedeuten

- Me ein Erdalkalimetall, vorzugsweise Calcium oder insbesondere Magnesium,
- x eine Zahl von 1,4 bis 10, vorzugsweise 1,4 bis 6 und
- n eine Zahl gleich oder größer als 0, vorzugsweise 0 bis 8.

Diese Verbindungen B) werden vorteilhafterweise in feingemahlener Form eingesetzt. Produkte mit einer durchschnittlichen Teilchengröße von kleiner als 100 µm, vorzugsweise von kleiner als 50 µm sind besonders gut geeignet.

Als Komponente B) können die erfindungsgemäßen Formmassen bis zu 30, vorzugsweise bis zu 20 Gew.-% eines faser- oder teilchenförmigen Füllstoffs oder deren Mischungen enthalten.

Als verstärkend wirkende Füllstoffe seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 µm, insbesondere 0,1 bis 0,5 µm aufweisen.

Andere geeignete Füllstoffe sind beispielsweise Wollastonit, Calciumcarbonat, Glaskugeln, Quarzmehl, Si- und Bornitrid oder Mischungen dieser Füllstoffe.

Bevorzugte Kombinationen von Füllstoffen sind: Wollastonit mit Glasfasern, wobei Mischungsverhältnisse von 5:1 bis 1:5 bevorzugt sind.

Die Antioxidantien (B), die einzeln oder als Gemische eingesetzt werden können, können in einer Menge von 0,05 bis 2 Gew.-%, vorzugsweise von 0,1 bis 1,0 Gew.-%, bezogen auf das Gewicht der Formmassen eingesetzt werden.

Als besonders wirksam erwiesen haben sich und daher vorzugsweise verwendet werden 2,2'-Methylen-bis-(4-methyl-6-tert.-butylphenyl), 1,6-Hexandiol-bis-[3,5-di-tert.-butyl-4-hydroxyphenyl)propionat (Irganox® 259), Pentaerythrityl-tetrakis-[3-(3,5-di-tert.-butyl-4-hydroxyphenyl)-propionat] und Irganox® 245 der Firma Ciba-Geigy, das besonders gut geeignet ist.

Als Komponente C) enthalten die erfindungsgemäßen Formmassen 1 bis 50, vorzugsweise 10 bis 40 und insbesondere 10 bis 20 Gew.-% eines thermoplastischen Polyurethans.

Geeignete TPU's können beispielsweise hergestellt werden durch Umsetzung von

a) organischen, vorzugsweise aromatischen Diisocyanaten,

b) Polyhydroxylverbindungen mit Molekulargewichten von 500 bis 8000 und

c) Kettenverlängerungsmitteln mit Molekulargewichten von 60 bis 400 in Gegenwart von gegebenenfalls

d) Katalysatoren,

e) Hilfsmitteln und/oder Zusatzstoffen.

Zu den hierfür verwendbaren Ausgangsstoffen (a) bis (c), Katalysatoren (d), Hilfsmitteln und Zusatzstoffen (e) möchten wir folgendes ausführen:

a) Als organische Diisocyanate (a) kommen beispielsweise aliphatische, cycloaliphatische und vorzugsweise aromatische Diisocyanate in Betracht. Im einzelnen seien beispielhaft genannt: aliphatische Diisocyanate, wie Hexamethylen-diisocyanat, cycloaliphatische Diisocyanate, wie Isophoron-diisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6--Toluylen-diisocyanat, 4,4'-, 2,4'- und 2,2'-Diphenylmethan-diisocyanat. Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-(1,2) und 1,5-Naphthylendiisocyanat. Vorzugsweise verwendet werden Hexamethylendiisocyanat, Isophoron-diisocyanat, 1,5-Naphthylen-diisocyanat, Diphenylmethan-diisocyanat-Isomerengemische mit einem 4,4'-Diphenylmethan-diisocyanatgehalt von größer als 96 Gew.-% und insbesondere 4,4'-Diphenylmethan-diisocyanat.

b) Als höhermolekulare Polyhydroxylverbindungen (b) mit Molekulargewichten von 500 bis 8000 eignen sich vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung, mit den obengenannten Molekulargewichten. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyl-diethanolamine, beispielsweise N-methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylen-glykole).

Vorzugsweise verwendet werden Polyetherole aus Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist; z.B. insbesondere Polyoxytetramethylen-glykole.

Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids, an das Startermolekül anpolymerisiert.

Die im wesentlichen linearen Polyetherole besitzen Molekulargewichte von 500 bis 8000, vorzugsweise 600 bis 6000 und insbesondere 800 bis 3500. Sie können sowohl einzeln als auch in Form von Mischungen untereinander zu Anwendung kommen.

Geeignete Polyesterole können beispielsweise aus Dicarbonsäuren mit 2 bis 12 Kohlenstoffatomen, vorzugsweise 4 bis 8 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Dialkylenglykol-polyadipate mit 2 bis 6 Kohlenstoffatomen im Alkylenrest, wie z.B. Ethandiol-polyadipate, 1,4-Butandiol-polyadipate, Ethandiol-butandiol-1,4-polyadipate, 1,6-Hexandiolneopentylglykol-polyadipate, Polycaprolactone und insbesondere 1,6-Hexandiol-1,4-butandiol-polyadipate.

Die Polyesterole besitzen Molekulargewichte von 500 bis 6000, vorzugsweise von 800 bis 3500.

c) Als Kettenverlängerungsmittel (c) mit Molekulargewichten von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di-(ß-hydroxyethyl)-hydrochinon, (cyclo)aliphatische Diamine, wie z.B. 4,4'-Diamino-dicyclohexylmethan, 3,3'-Dimethyl-4,4'-diamino-dicyclohexylmethan, Isophoron-diamin, Ethylendiamin, 1,2-, 1,3-Propylen-diamin, N-Methyl-propylendiamin-1,3, N,N'-Dimethyl-ethylendiamin und aromatische Diamine, wie z.B. 2,4- und 2,6-Toluylen-diamin, 3,5-Diethyl-2,4- und -2,6-toluylen-diamin und primäre ortho-di-, tri- und/oder tetraalkylsubstituierte 4,4'-Diamino-diphenylmethane.

Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1:1 bis 1:12, insbesondere von 1:1,8 bis 1:6,4, wobei die Härte und der Schmelzpunkt der TPU mit zunehmendem Gehalt an Diolen ansteigt.

Zur Herstellung der TPU werden die Aufbaukomponenten (a), (b) und (c) in Gegenwart von gegebenenfalls Katalysatoren (d), Hilfsmitteln und/oder Zusatzstoffen (e) in solchen Mengen zur Reaktion gebracht, daß das Äquivalenzverhältnis von NCO-Gruppen der Diisocyanate (a) zur Summe der Hydroxylgruppen oder Hydroxyl- und Aminogruppen der Komponenten (b) und (c) 1:0,85 bis 1,20, vorzugsweise 1:0,95 bis 1:1,05 und insbesondere 1:0,98 bis 1,02 beträgt.

d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Teilen pro 100 Teile Polyhydroxylverbindung (b) eingesetzt.

Neben Katalysatoren können den Aufbaukomponenten (a) bis (c) auch Hilfsmittel und/oder Zusatzstoffe (e) einverleibt werden. Genannt seien beispielsweise Gleitmittel, Inhibitoren, Stabilisatoren gegen Hydrolyse, Licht, Hitze oder Verfärbung und Weichmacher.

Nähere Angaben über die obengenannten Hilfsmittel- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-OS 29 01 774 zu entnehmen.

Erfindungsgemäß erfolgt die Herstellung der POM/TPU-Formmassen durch Mischen der Komponenten A) und C) sowie gegebenenfalls B) in einem mehrstufigen Extruder bei Temperaturen von 170 bis 280, bevorzugt von 175 bis 270°C innerhalb von 0,1 bis 15, bevorzugt von 1 bis 5 min. Besonders bevorzugt wird die Komponente C) im letzten Drittel, bezogen auf die Gesamtlänge des Extruders mit mehreren Zonen, zugegeben.

Das Verfahren kann vorzugsweise auf Ein- oder Zweischneckenextrudern durchgeführt werden. Diese sind vorzugsweise aus einzelnen Gehäusen zusammengesetzt, die temperierbare Mäntel aufweisen. Die Gestaltung der Schnecken unterliegt keiner Beschränkung, es können Förderelemente (mit oder ohne Schubkanten), Knetelemente und/oder Mischelemente vorhanden sein. Darüber hinaus ist es möglich und häufig vorteilhaft teilweise, d.h. abschnittsweise stauende oder rückfördernde Elemente im Extruder zu verwenden, um Verweilzeit und Mischungseigenschaften zu beeinflussen und zu steuern.

Wegen der selbstreinigenden Eigenschaften und der besseren Einstellbarkeit des Verweilzeitspektrums werden besonders bevorzugt Zweischneckenextruder mit gleichlaufenden Schnecken eingesetzt. Der Extruder ist in mindestens 2, gegebenenfalls auch in mehrere Bereiche unterteilt. Ein Bereich besteht im allgemeinen aus mehreren Zonen, wobei eine Zone üblicherweise eine Länge von 3 D aufweist (der Begriff eine Zone kann auch als ein Schuß bezeichnet werden). Die Gesamtlänge des Extruders beträgt von 12 D bis 45 D, bevorzugt von 24 bis 36 D (D = Durchmesser der Schnecke).

Als besonders geeignet haben sich hierbei folgende Verfahren zur Herstellung erwiesen, indem man

I) in einem ersten Bereich (bis zum Eintrag der TPU-Schmelze) bei Temperaturen von 170 bis 280°C, bevorzugt von 175 bis 270°C, innerhalb von 0,1 bis 15 min, bevorzugt von 0,5 bis 10 min, und insbesondere von 1 bis 5 min,

A) 10 bis 99 Gew.-% einer Polyoxymethylenhomo- oder Copolymerisates und

B) 0 bis 50 Gew.-% Zusatzstoffe und Verarbeitungshilfsmittel

erhitzt und eine homogene Polymerschmelze herstellt und

II) anschließend in mindestens einem weiteren Bereich des Extruders bei 175 bis 220°C von 0,1 bis 4 min, bevorzugt bei 180 bis 210°C innerhalb von 0,2 bis 1,5 min,

C) 1 bis 50 Gew.-% eines thermoplastischen Polyurethans

zusetzt, homogenisiert und die erhaltene Mischung extrudiert.

Die Verweilzeit im ersten Bereich (bis zum Eintrag der TPU-Schmelze) wird weitgehend durch die thermisch instabilen Anteile des Roh-Polyoxymethylens bestimmt.

Über die Art und Menge der Zusatzstoffe B) lassen sich die gewünschten Eigenschaften der Endprodukte in weitem Maße steuern.

Es ist deshalb bei faserförmigen Zusatzstoffen vorteilhaft, diese erst nach der Zugabe von Stabilisatoren usw. zuzudosieren und zu einer homogenen Polymerschmelze zu verarbeiten.

Es ist ebenso möglich, die Verarbeitungshilfsmittel B) erst mit der Komponente C) zuzudosieren oder sowohl im ersten Bereich als auch in anschließendem Bereich (nach TPU-Eintrag) des Extruders zuzugeben.

Der erste Bereich des Extruders, in der das thermisch stabile POM hergestellt wird und gegebenenfalls mit Komponente B) homogenisiert wird, weist vorzugsweise eine Länge von 18 bis 36, bevorzugt 24 bis 30 D (D = Durchmesser der Schnecke) auf.

In der Nähe der Dosieröffnung im ersten Bereich sind an der Schnecke bevorzugt Förderelemente angebracht, im weiteren Verlauf können sich auch Knetelemente befinden. Am Ende des ersten Bereiches ist besonders bevorzugt mindestens ein rückförderndes Element vorhanden, mit dem die Verweilzeit im ersten Bereich bis zur Zugabe der TPU-Schmelze beeinflußt werden kann.

Der zweite Bereich des Extruders nach TPU-Eintrag weist eine Länge von 3 D bis 15 D, bevorzugt von 6 bis 12 D auf.

Bevorzugt erfolgt die Dosierung mit einem Seitenextruder mit temperierbarem Mantel oder einer kalt fördernden Stopfschnecke, in welche die Komponenten eindosiert, ggf. aufgeschmolzen und dem Anfang des zweiten Bereiches des Extruders zugeführt werden.

Im allgemeinen ist der Schneckendurchmesser des Seitenextruders geringer als der des Hauptextruders und die Schneckenlänge liegt im Bereich von 18 bis 27 D, vorzugsweise von 21 bis 24 D. Die Temperatur bei der Dosierung in den Hauptextruder liegt im Bereich von 175 bis 220°C, vorzugsweise von 180 bis 210°C. Die Schnecke des Seitenextruders kann so gestaltet sein, daß die Komponenten vor der Dosierung in den Hauptextruder bereits vorgemischt sind. Vorzugsweise werden die Komponenten im Seitenextruder aufgeschmolzen.

Der erste Bereich des Hauptextruders vor dem Seitenextruder, in dem dann die bereits vorliegenden Komponenten mit den aus dem Beginn des zweiten Bereiches zudosierten Komponenten abgemischt werden, hat im allgemeinen eine Länge von 18 bis 36 D, vorzugsweise von 24 bis 30 D.

Durch dieses erfindungsgemäße Verfahren wird eine sehr gute Dispergierung der Komponente C) im POM erzielt (diskrete Partikel). Die mittlere Teilchengröße der Partikel beträgt allgemein von 1 bis 10 µm, bevorzugt 1 bis 2 µm. Die mittlere Teilchengröße (arithmethisches Mittel, Zahlenmittel) wird allgemein mit Hilfe der Elektronenmikroskopie bestimmt. Anhand der elektronenmikroskopischen Aufnahmen können die im POM eingeketteten diskreten TPU-Partikel ausgemessen werden.

Die Granulatproben werden hierzu ultradünn geschnitten und bei tiefen Temperaturen (Trägerflüssigkeit DMSO : $H_2O$ im Verhältnis 60 : 40) auf befilmte Trägernetze übertragen. Im allgemeinen wird hierbei kein Kontrastmittel benötigt, da durch den starken Elektronenstrahlabbau des POM während der Mikroskopie ein Dickenkontrast entsteht, welcher die POM-Matrix hell und die TPU-Teilchen dunkel erscheinen läßt.

Die vorteilhafte Morphologie, der auf diese Weise herstellbaren Formmassen, führt zu Formkörpern, die eine höhere Fließfähigkeit als auch eine bessere Zähigkeit aufweisen. Insbesondere weisen derartige Formmassen eine sehr gute Farbstabilität auf, wobei der Farbabstand $\Delta E$ im allgemeinen kleiner 3,0, bevorzugt kleiner 2,5 beträgt.

Das erfindungsgemäße Verfahren weist den Vorteil auf, daß es unabhängig von Art und Menge der einzelnen Komponenten ist.

Die Formmassen eignen sich insbesondere zur Herstellung von Formkörpern durch Spritzguß und Extrusion.

Beispiele

Es wurden folgende Komponenten eingesetzt:

Komponente A

A/1 Polyoxymethylencopolymerisat aus 97,3 Gew.-% Trioxan und 2,7 Gew.-% Butandiolformal. Das Produkt enthielt noch ungefähr 3 Gew.-% nicht umgesetztes Trioxan und 5 Gew.-% thermisch instabile Kettenenden. Nach Abbau der thermisch instabilen Anteile hatte das Copolymer einen Schmelzindex von 10 g/10 min (190°C, 2,16 kg, nach DIN 53 735).

A/2 Polyoxymethylencopolymerisat aus 97,3 Gew.-% Trioxan und 2,7 Gew.-% Butandiolformal. Das Rohprodukt enthielt noch ungefähr 3 Gew.-% nicht umgesetztes Trioxan und 5 Gew.-% thermisch instabiler Kettenenden.

Komponente B

B/1 Irganox® 245 der Firma Ciba-Geigy:

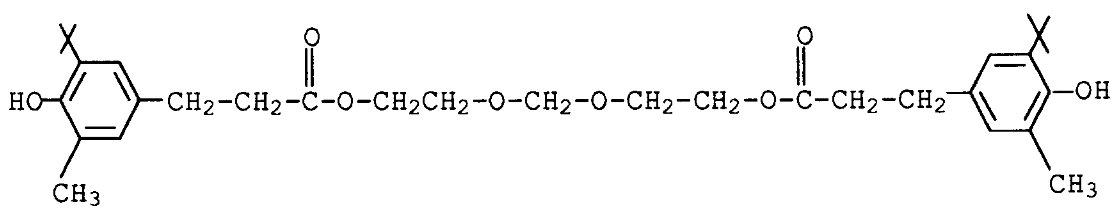

B/2 Melamin-Formaldehyd-Kondensat (MFK) gemäß Beispiel 1 der DE-A 25 40 207.

Komponente C

| | |
|---|---|
| C/1 | TPU aufgebaut aus: |
| | 41,4 Gew.-% Adipinsäure |
| | 24,1 Gew.-% Methylendiphenyl-4,4'-diisocyanat (MDI) |
| | 33,8 Gew.-% Butan-1,4-diol |
| | 0,7 Gew.-% Bis-(2,6-diisopropylphenyl)-carbodiimid |
| C/1V | zum Vergleich: Ein Kern-Schale-Polymerisat aus |
| Kern: | Styrol-Butadiencopolymer (Verhältnis 1:3) |
| 1. Hülle: | Styrol |
| 2. Hülle: | Methylmethacrylat |

| | |
|---|---|
| Gesamtzusammensetzung | 52,5 Gew.-% Butadien<br>32,5 Gew.-% Styrol<br>15,0 Gew.-% Methylmethacrylat |
| C/2V | zum Vergleich:<br>Ein Ethylencopolymerisat aufgebaut aus:<br>60 Gew.-% Ethylen<br>35 Gew.-% n-Butylacrylat<br>4,3 Gew.-% Acrylsäure<br>0,7 Gew.-% Maleinsäureanhydrid<br>(MFI: 10 g/10 min bei 190°C/1,16 kg Belastung) |

Herstellung der Formmassen

Zur Durchführung des Verfahrens wurde ein Zweischneckenextruder (ZSK 90, Firma Werner & Pfleiderer) eingesetzt. Der Schneckendurchmesser betrug 90 mm. Die Längen der einzelnen Bereiche sind als Vielfaches des Schneckendurchmessers (D) angegeben.

Der erste Bereich des Extruders war 30 D (≙ 10 Zonen) lang und hatte am Anfang eine Einspeiseöffnung für feste Substanzen A) und B). Diese Substanzen wurden über Dosierwaagen zugeführt. Unter der Einspeiseöffnung waren die Schneckenelemente förderwirksam ausgestaltet, dieser Zonenteil (3 D) wurde auf 20°C gekühlt. Die nächsten drei Zonen (≙ 12 D) wurden auf 80°C erhitzt. Der Rest des ersten Bereiches (15 D) hatte eine Temperatur von 190°C. Im mittleren Teil des ersten Bereiches befanden sich Knetelemente in der Schnecke. Am Ende der Schnecke war ein rückförderndes Element eingebaut.

Der zweite Bereich des Extruders war 9 D lang und hatte am Anfang seitlich eine Einspeiseöffnung. Der Rest des zweiten Bereiches war außerdem zur Entgasungszone hin geschlossen. Die Komponente C) wurde durch die seitliche Einspeiseöffnung in den zweiten Bereich mit einem Seitenextruder zugeführt. Der zweite Bereich (nach Eintrag der TPU-Schmelze) wurde auf 190°C erhitzt.

Im Seitenextruder wurde das TPU schonend aufgeschmolzen. Der Schneckendurchmesser betrug 90 mm und an Länge 24 D. Die Temperatur der Extrudermäntel des Seitenextruders betrug 180°C. Am Anfang des Seitenextruders wurden die Substanzen durch Dosierwaagen zugeführt und am Ende des Seitenextruders in die seitliche Einspeiseöffnung des zweiten Bereiches zugeführt.

Der Entgasungsbereich des Hauptextruders war 9 D lang und hatte am Anfang eine Entgasungsöffnung, an die ein Vakuum von 100 Torr angelegt wurde. Im zweiten Teil der Entgasungzone wurde ein Druck aufgebaut und das Produkt über eine Lochdüse ausgetragen. Das Produkt wurde durch ein Wasserbad gezogen und anschließend granuliert und getrocknet.

Beispiele 1 und 2 (erfindungsgemäß)

Im Seitenextruder wurde die Komponente C/1 aufgeschmolzen.

Das Roh-Polyoxymethylen (Komponente A/2) wurde mit B/1 und B/2 im Hauptextruder aufgeschmolzen und C/1 als Seitenstrang zugeführt. Nach dem Mischen wurde der Strang ausgetragen, gekühlt und granuliert.

Vergleichsbeispiele 3 und 4

Die Komponenten A/1, welche bereits B/1 und B/2 enthielt und C/1 wurden als Granulat in einem Taumlermischer bei Raumtemperatur gemischt und anschließend auf einem Zweischneckenextruder bei 190°C konfektioniert.

Vergleichsbeispiele 5 und 6

Die Herstellung erfolgte analog den Vergleichsbeispielen 3 und 4, es wurde jedoch Komponente C/1V als Schlagzähmodifier eingesetzt.

Vergleichsbeispiel 7 und 8

Die Herstellung erfolgte analog den erfindungsgemäßen Beispielen 1 und 2; es wurde jedoch Komponente C/1V als Schlagzähmodifier eingesetzt. Für die Dosierung des Pfropfkautschukes (schlechtes Aufschmelzverhalten) über den Seitenextruder war es erforderlich, zunächst eine Granulatmischung aus der

Komponente A/1 und C/1V im Verhältnis 2 : 1 herzustellen und diese im Seitenextruder aufzuschmelzen. Anschließend wurde wie bei Beispiel 1 ausgeführt die Mischung weiterverarbeitet.

Vergleichsversuche 9 und 10

wurden entsprechend den Vergleichsbeispielen 3 und 4 durchgeführt, jedoch mit Komponente C/2V.

Vergleichsversuche 11 und 12

wurden entsprechend den erfindungsgemäßen Beispielen 1 und 2 durchgeführt, jedoch mit Komponente C/2V.

Es wurden folgende Prüfungen durchgeführt:

| | |
|---|---|
| Ws Schädigungsarbeit, | Durchstoßversuch nach ISO 6603-2, Probekörper: Rundscheibe Ø 60 mm, Dicke 2 mm |
| MVR | nach DIN 53 735 bei 190°C und einer Belastung von 2,16 kg |
| Kerbschlagzähigkeit ($a_K$) | am Norm-Kleinstab nach ISO 179 1eA |
| Streckspannung ($\delta_s$) | nach DIN 53 455-3-5 |
| Bruchspannung ($\delta_R$) | nach DIN 53 455-3-5 |
| Bruchdehnung ($\epsilon_R$) | nach DIN 53 455-3-5 |
| E-Modul | nach DIN 53 457-t (Zugversuch), Probekörper Nr. 3 (Schulterstab) wie in DIN 53 455 beschrieben |
| Farbabstände Δ E | nach der CIELAB-Formel nach DIN 6174 und DIN 5033 (Berechnung und Durchführung der Messungen). |

Gewichtsverlustbestimmung:

2 g des Produktgranulates wurden eine halbe Stunde mit Luft bzw. Stickstoffgas bei RT bei einer Durchströmgeschwindigkeit von 14 l/h (Krohne-Rotameter) umspült. Anschließend wurden die gefüllten Reagenzgläser in einen vorher auf 220°C geheizten Aluminiumblock abgesenkt und darin zwei Stunden belassen. Nach Abkühlung auf RT wurden zurückgewogen und die Gewichtsverluste in % bestimmt.

TPU-Gehaltsbestimmung:

ca. 1,5 g des TPU-haltigen Produktes wurden mit 50 ml N-Methylpyrrolidon versetzt und bei 190°C 30 Minuten unter Rückfluß erhitzt. Dabei wurde das TPU vollständig gelöst und anschließend bei RT abgesaugt, mit Aceton gewaschen, bis die braune Färbung verschwunden war. Über Nacht wurde bei 80°C im Trockenschrank getrocknet und der Rückstand bei RT zurückgezogen und der Gewichtsverlust in % bestimmt.

Die Zusammensetzung der Formmassen und die Ergebnisse der Messungen sind den Tabellen zu entnehmen.

Tabelle 1

| | Beispiel 1 | Vergleichsbeispiel 3 | Beispiel 2 | Vergleichsbeispiel 4 |
|---|---|---|---|---|
| Gew.Verluste [%]<br>Stickstoff<br>Luft | <br>0,2<br>0,9 | <br>0,3<br>1,4 | <br>0,2<br>0,9 | <br>0,3<br>1,5 |
| MVR [$cm^3$/10'] | 7,5 | 6,6 | 5,7 | 5,0 |
| TPU-Gehalt [Gew.-%] | 10,1 | 10,2 | 19,9 | 20,2 |
| $a_K$<br>[$kJ/m^2$]<br>23°C<br>-30°C | <br><br>14,5<br>7,5 | <br><br>10,0<br>6,7 | <br><br>18,4<br>9,9 | <br><br>12,7<br>8,7 |
| Ws [Nm]<br>23°C<br>-40°C | <br>28,5<br>8,6 | <br>21,3<br>4,6 | <br>39,0<br>15,1 | <br>25,3<br>7,6 |
| $\delta_S$<br>[$N/mm^2$] | 50,7 | 50,5 | 44,8 | 44,3 |
| $\delta_R$<br>[$N/mm^2$] | 40,9 | 40,9 | 36,1 | 36,0 |
| $\varepsilon_R$<br>[%] | 79,1 | 71,6 | 83,4 | 75,5 |
| E-Modul [$N/mm^2$] | 2090 | 2090 | 1720 | 1725 |
| Farbabstände<br>(Δ E-Wert) | 1,7 | 4,8 | 1,9 | 4,9 |

Der Gehalt der Komponenten B/1 und B/2 betrug in allen Beispielen 0,4 Gew.-% bzw. 0,2 Gew.-%.

Tabelle 2

| Vergleichsbeispiel | 5 | 6 | 7 | 8 |
|---|---|---|---|---|
| Gew.Verluste [%]<br>Stickstoff<br>Luft | <br>0,3<br>3,0 | <br>0,3<br>8,6 | <br>0,7<br>2,7 | <br>0,6<br>9,0 |
| MVR [$cm^3$/10'] | 5,6 | 2,6 | 6,2 | 2,5 |
| Pfropf-Kautschuk C/1V [Gew.-%] | 9,4 | 19,1 | 9,5 | 21,1 |
| $a_K$<br>[$kJ/m^2$]<br>23°C<br>-30°C | <br><br>3,4<br>2,2 | <br><br>6,5<br>2,9 | <br><br>3,3<br>1,7 | <br><br>5,4<br>2,1 |
| Ws [Nm]<br>23°C<br>-40°C | <br>23,1<br>6,5 | <br>25,0<br>6,3 | <br>17,0<br>8,1 | <br>15,0<br>10,0 |
| $\delta_S$<br>[$N/mm^2$] | 51,6 | 39,6 | 50,2 | 36,9 |
| $\delta_R$<br>[$N/mm^2$] | 51,7 | 39,6 | 50,3 | 36,7 |
| $\varepsilon_R$<br>[%] | 27,6 | 43,4 | 25,5 | 58,0 |
| E-Modul [$N/mm^2$] | 2200 | 1700 | 2140 | 1600 |
| Farbabstände (Δ E-Wert) | 4,7 | 5,0 | 4,8 | 5,2 |

Tabelle 3

| Vergleichsbeispiel | 9 | 10 | 11 | 12 |
|---|---|---|---|---|
| Gew.Verluste [%] | | | | |
| Stickstoff | 0,4 | 0,3 | 0,4 | 0,4 |
| Luft | 3,5 | 5,4 | 5,4 | 7,4 |
| MVR [$cm^3$/10'] | 14,6 | 11,8 | 13,1 | 10,9 |
| Gehalt Ethylencopolymer Gew.-% | 9,4 | 19,1 | 10,4 | 20,7 |
| $a_K$ [kJ/$m^2$] | | | | |
| 23°C | 9,4 | 6,5 | 3,3 | 5,4 |
| -30°C | 4,6 | 4,0 | 4,8 | 4,6 |
| Ws [Nm] | | | | |
| 23°C | 11,1 | 12,6 | 11,2 | 12,8 |
| -40°C | 0,6 | 0,7 | 0,6 | 0, |
| $\delta_S$ [N/$mm^2$] | 51,6 | 39,1 | 46,3 | 37,3 |
| $\delta_R$ [N/$mm^2$] | 41,1 | 32,6 | 38,7 | 31,6 |
| $\varepsilon_R$ [%] | 41,6 | 58,9 | 56,2 | 65,8 |
| E-Modul [N/$mm^2$] | 2230 | 1580 | 2040 | 1620 |
| Farbabstände ($\Delta$ E-Wert) | 4,4 | 4,8 | 4,3 | 4,9 |

Die in den Tabellen aufgeführten Ergebnisse zeigen die Vorteile zur Herstellung von zähmodifiziertem POM nach der neuen Verfahrensweise. Die Gewichtsverluste (thermische Stabilität) sind vor allem in Luftatmosphäre um ca. 35 bis 40 % geringer, die Fließfähigkeit ist um ca. 10 bis 15 % besser, die Kerbschlagzähigkeit um ca. 45 % (bei RT) besser, die Schädigungsarbeit um ca. 34 % (bei 10 % TPU) - 54 % (bei 20 % TPU) besser und die Verfärbung während des Verarbeitungsprozesses nimmt um ca. 60

bis 65 % ab.

**Patentansprüche**

1. Kontinuierliches Verfahren zur Herstellung von thermoplastischen Formmassen auf der Basis von Polyoxymethylenen und thermoplastischen Polyurethanen in einem Extruder, dadurch gekennzeichnet, daß man
   I) in einem ersten Bereich bei Temperaturen von 170 bis 280°C
      A) 10 bis 99 Gew.-% eines Polyoxymethylenhomo- oder -copolymerisates und
      B) 0 bis 50 Gew.-% Zusatzstoffe und Verarbeitungshilfsmittel,
   wobei sich die Angaben in Gewichtsprozent auf das Gesamtgewicht der Komponenten A) bis C) beziehen, über einen Zeitraum von 0,1 bis 15 min erhitzt, und eine homogene Polymerschmelze herstellt und
   II) anschließend in mindestens einem weiteren Bereich des Extruders bei 175 bis 220°C
      C) 1 bis 50 Gew.-% eines thermoplastischen Polyurethans
   zusetzt, homogenisiert und die erhaltene Mischung extrudiert.

2. Verfahren nach Anspruch 1, dadurch gekennzeichnet, daß man die Komponente C) im letzten Drittel, bezogen auf die Gesamtlänge des Extruders mit mehreren Zonen, zugibt.

3. Verfahren nach den Ansprüchen 1 oder 2, dadurch gekennzeichnet, daß die Gesamtlänge des Extruders von 12 D bis 45 D beträgt.

4. Verfahren nach den Ansprüchen 1 bis 3, dadurch gekennzeichnet, daß die Komponente A) bis zu 20 Gew.-%, bezogen auf A) an thermisch instabilen Kettenenden enthält.

5. Thermoplastische Formmassen erhältlich nach dem Verfahren gemäß den Ansprüchen 1 bis 4, welche im wesentlichen aus den Komponenten A) und C) bestehen und einen Farbabstand $\Delta$ E von kleiner 3,0 aufweisen.

6. Thermoplastische Formmassen nach Anspruch 5, in denen die Komponente C) in Form von diskreten Partikeln mit einer mittleren Teilchengröße (Zahlenmittel) von 1 $\mu$m in der Komponente A) dispergiert vorliegt.